# EUROPEAN PATENT SPECIFICATION

(11) **EP 1 908 313 B1**
(45) Date of publication and mention of the grant of the patent: **24.12.2008**
(21) Application number: 06757836.9
(22) Date of filing: 12.07.2006
(51) Int. Cl.: H04Q 7/22

(54) **STORAGE AND RETRIEVAL OF SMS MESSAGES IN A TELECOMMUNICATION SYSTEM**
SPEICHERUNG UND ABRUF VON SMS NACHRICHTEN IN EINEM TELEKOMMUNIKATIONSSYSTEM
STOCKAGE ET RECUPERATION DE MESSAGES SMS DANS UN SYSTEME DE TELECOMMUNICATION

(30) Priority: 12.07.2005 NL 1029494
(43) Date of publication of application: 09.04.2008
(73) Proprietor: Innofac B.V., 7603 Almelo (NL)
(72) Inventor: VAN DER WEIDE, Henk-Jan, NL-7603 NJ Almelo (NL)
(74) Representative: Schumann, Bernard Herman Johan
(86) International application number: PCT/NL2006/050174
(87) International publication number: WO 2007/008076

(56) References cited:
- EP-A- 1 255 414
- GB-A- 2 404 301
- US-A1- 2004 005 881
- US-A1- 2004 156 483

## Description

The invention relates to a telecommunication system with
a fixedly disposed central computer system operated by a provider;
a network of distributed transmitter/receiver units connected to this computer system, and
a number of wireless telephones, for instance of the GSM or UMTS type, which are in the possession of and are used by users, and comprise means for sending and receiving SMS and/or MMS messages to and from a selected user via the computer system.

Such a telecommunication system is known.

The document GB-A-2 404 301 discloses a system allowing a message transmitted in a telecommunication network and addressed to a first terminal to be downloaded by a second terminal, comprising storing the message in the network, receiving at the network a request that the message be downloaded to the second terminal, and transmitting the message to the second terminal. Thus, a subscriber to a remote SMS download service who is away from a home terminal may download and view an SMS message without having to return to or use the home terminal.

The document EP-A-1 255 414 discloses a system and method for management of SMS messages, and in particular automatic replies, forwarding, filtering, saving and deleting of SMS messages, wherein a message receiver is allowed to set up, change or delete message handling instructions.

SMS and MMS are services on the basis of "push". This means that the receiver receives the messages sent to him/her unconditionally.

Such messages are often received at a moment or in a situation perceived by a user as being inconvenient or otherwise unwelcome. When a message is received, the recipient mobile telephone usually generates an acoustic signal as well as a visual signal, this being perceived as irritating in for instance a quiet environment, during a concert or the like. Conditions can further occur in which the mobile phone of a user is also accessible to third parties. When an SMS or MMS is received it is then not possible to prevent these third parties gaining access to the possibly confidential information available in the relevant message. This can be highly annoying for a user.

In view of the foregoing, the invention has for its object to provide a telecommunication system of the stated type, which provides the option of a user activating a service provided by the provider via said computer, whereby SMS and MMS messages are stored from a point in time chosen by the user and are only forwarded to him/her at a second point in time chosen by him/her. In this way the user has the option of activating said service at the start of a situation in which the forwarding of messages is undesired, and of deactivating the service at the moment that the user wishes to receive the possibly stored messages.

This object according to the invention is realized with a telecommunication system which has the feature that the computer system comprises:
a memory in which said messages can be stored and from which said messages can be retrieved and read in order to be fed to said network such that the relevant user can receive them;
access means which can be controlled by a user by means of his/her mobile phone such that the relevant user gains access to the memory; and
identification means which assign a personal code (PIN) to a user at the request of this user, and which send this code by SMS to the mobile phone of the relevant user, wherein the access means are released by this user sending an SMS with this code to a specifically allocated phone number, wherein
   (1) after sending an SMS with the assigned code for the first time, SMS and MMS messages addressed to the mobile phone of the relevant user are stored in the memory and are blocked from transmission via the network; and
   (2) by sending an SMS with the assigned code for the second and subsequent times, all messages stored in the memory are sent to the mobile phone of the relevant user and erased from the memory.

A telecommunication system is known from GB-A-2 404 301 which provides the option of downloading SMS messages by means of a remote control. For this purpose the user must subscribe to the service in question. The server saves copies of all SMS messages not yet read by the subscriber. The subscriber can download SMS messages by means of another phone without first having to return to his/her 'home' telephone for this purpose. In order to make use of the service in question the user must communicate to the system an authorization code assigned to him/her. The 'home' telephone can be a mobile phone.

EP-A-1 255 414 relates to a system configuration wherein use is made of sensing an SMS message to a message receiver. This can for instance be a wireless telephone. Use is made of a central management system which controls transmission of and reply to SMS messages. The system provides automatic reply to SMS messages. As an example, this specification refers to the sending of a message that the relevant subscriber is on holiday. In order to activate the service the user must enter a determined code assigned to him/her.

The prior art briefly described above does not state that the user can activate and deactivate a central storage service for SMS and MMS messages by transmitting a specific PIN code, as according to the invention.

In a specific embodiment the telecommunication system according to the invention has the feature that the memory comprises selection means which can be controlled by a user by means of his/her mobile phone such that he/she can store numbers of selected mobile phones in the selection means, whereby the storing of messages in the memory respectively retrieving and reading messages from the memory takes place only in respect of messages which are received from the relevant selected mobile phones. In this case the user activates the service offered by the provider via the computer system of the latter only for selected numbers.

In yet another embodiment the telecommunication system according to the invention has the special feature that the memory comprises a timer which controls the memory after a message has been stored therein such that the memory saves this message for a chosen period of time entered in the timer, for instance 21 days, and then erases it. This avoids the central computer of the provider becoming congested with an unnecessarily large number of SMS and MMS messages. This option assumes that after some time, for instance the stated three weeks, the topicality of the information in question is lost and that the user clearly does not set great store by receiving the messages from the preceding period.

In order to make the accessibility of the service as easy as possible for every user, an embodiment is recommended in which the assigned telephone number is the telephone number of the mobile phone of the relevant user. In this manner it is not necessary for the user to enter a specific telephone number in the number memory of his/her mobile telephone or to remember a number. It is assumed in this respect that everyone knows their own telephone number.

According to another aspect of the invention, the telecommunication system has the special feature that, when said code is assigned at the request of the user, the identification means if necessary also modify the relevant settings of the mobile phone of the user.

Such a modification of the settings is also generally usual for other services and is transmitted via an SMS and communicated to the recipient in the usual manner in the form of an SMS.

According to a final aspect of the invention, the telecommunication system has the special feature that the access means for a user can be controlled via the website of the provider.

The service according to the invention requires that the provider installs a relevant application in the central computer system. This application can consist of a database with the relevant telephone numbers and the associated messages coupled thereto. These messages remain retrievable for a predetermined period, for instance 21 days. The sender of an SMS or MMS must however pay the costs of the SMS messages sent by him and temporarily blocked by the recipient, even in the case the service is activated.

The provider preferably makes available a website also allowing retrieval and modification of the settings relating to the service via the web.

As already noted above, when the message blocking service in question is activated the user receives an SMS which adjusts the settings of his/her mobile phone to this service. If the mobile phone is not known, the changes in the settings can only be carried out via the web.

According to a specific aspect of the invention, the telecommunication system has the special feature that a user can specify numbers of mobile phones to the selection means by means of a second code (PIN) assigned to him/her, whereafter SMS and MMS messages originating from those mobile telephones are not stored in the memory and are thus not sent to the user when messages stored in the memory are retrieved by him/her.

According to a specific aspect of the invention, the telecommunication system comprises blocking means with which a user can send a message to the computer system by means of his/her mobile phone, as a result of which the computer system is adjusted such that a third party, who sends an SMS or MMS message by means of his/her mobile phone to the mobile phone of said user, receives a reply on his/her mobile phone which shows that the mobile telephone of said user is switched off or is out of reach of the network.

The invention can be very briefly summarized as follows. The user gains access to a service provided by the provider by activating thereof by means of an SMS which is sent to the computer system by his/her mobile telephone. In the menu of the mobile telephone the user can block all incoming SMS and MMS messages or messages coming from selected numbers temporarily or permanently (until further notice). By sending an assigned code (PIN), which the user receives upon activation, to the provider by means of an SMS, all SMS and MMS messages stored in the memory are forwarded to the user, except the messages coming from senders mentioned on the list of numbers to be definitively blocked, as given to the provider by the user. Such messages are neither stored in the memory nor forwarded to the user directly or upon request.

## Claims

1. Telecommunication system with
a fixedly disposed central computer system operated by a provider;
a network of distributed transmitter/receiver units connected to this computer system, and
a number of wireless telephones, for instance of the GSM or UMTS type, which are in the possession of and are used by users, and comprise means for sending and receiving SMS and/or MMS messages to and from a selected user via the computer system,
**characterized in that**
the computer system comprises:
a memory in which said messages can be stored and from which said messages can be retrieved and read in order to be fed to said network such that the relevant user can receive them;
access means which can be controlled by a user by means of his/her mobile phone such that the relevant user gains access to the memory; and
identification means which assign a personal code to a user at the request of this user, and which send this code by SMS to the mobile phone of the relevant user, wherein the access means are released by this user sending an SMS with this code to a specifically allocated phone number, wherein
(1) after sending an SMS with the assigned code for the first time, SMS and MMS messages addressed to the mobile phone of the relevant user are stored in the memory and are blocked from transmission via the network; and
(2) by sending an SMS with the assigned code for the second and subsequent times, all messages stored in the memory are sent to the mobile phone of the relevant user and erased from the memory.

2. Telecommunication system as claimed in claim 1, wherein the memory comprises selection means which can be controlled by a user by means of his/her mobile phone such that he/she can store numbers of selected mobile phones in the selection means, whereby the storing of messages in the memory respectively retrieving and reading messages from the memory takes place only in respect of messages which are received from the relevant selected mobile phones.

3. Telecommunication system as claimed in claim 1, wherein the memory comprises a timer which controls the memory after a message has been stored therein such that the memory saves this message for a chosen period of time entered in the timer, for instance 21 days, and then erases it.

4. Telecommunication system as claimed in claim 1, wherein the assigned telephone number is the telephone number of the mobile phone of the relevant user.

5. Telecommunication system as claimed in claim 1, wherein, when said code is assigned at the request of the user, the identification means if necessary also modify the relevant settings of the mobile phone of the user.

6. Telecommunication system as claimed in claim 1, wherein the access means for a user can be controlled via the website of the provider.

7. Telecommunication system as claimed in claim 2, wherein a user can specify numbers of mobile phones to the selection means by means of a second code assigned to him/her, whereafter SMS and MMS messages originating from those mobile telephones are not stored in the memory, and are thus not sent to the user when messages stored in the memory are retrieved by him/her.

8. Telecommunication system as claimed in any of the foregoing claims, comprising blocking means with which a user can send a message to the computer system by means of his/her mobile phone, as a result of which the computer system is adjusted such that a third party, who sends an SMS or MMS message by means of his/her mobile phone to the mobile phone of said user, receives a reply on his/her mobile phone which shows that the mobile telephone of said user is switched off or is out of reach of the network.

## Patentansprüche

1. Telekommunikationssystem mit
einem fest angeordneten zentralen Computersystem, das durch einen Anbieter betrieben wird;
einem Netz von verteilten Sender/Empfängereinheiten mit diesem Computersystem verbunden sind, und
einer Anzahl von drahtlosen Telefonen, z. B. vom GSM- oder UMTS-Typ, die in Besitze sind von und benutzt werden durch Benutzer und Mittel aufweisen, SMS- und/oder MMS-Meldungen zu und von einem ausgewählten Benutzer über das Computersystem zu senden und zu empfangen,
**dadurch gekennzeichnet, dass**
das Computersystem aufweist,:
einen Speicher, in dem die Meldungen gespeichert werden können und von dem die Meldungen abgerufen und gelesen werden können, um dem Netz zugeführt zu werden, so dass der betreffende Benutzer sie empfangen kann;
Zugriffsmittel, die durch einen Benutzer mit Hilfe seines/ihres Mobiltelefons kontrolliert werden können, so dass der betreffende Benutzer Zugang zum Speicher erhält; und
Identifizierungsmittel, die einem Benutzer einen persönlichen Code bei Anforderung dieses Benutzers zuordnen und die diesen Code durch SMS zu dem Mobiltelefon des entsprechenden Benutzers senden, wobei die Zugangsmittel **dadurch** freigegeben werden, dass dieser Benutzer eine SMS mit diesem Code zu einer besonders zugeteilten Telefonnummer sendet, wobei
(1) nach erstmaligem Senden einer SMS mit dem zugeordneten Code SMS- und MMS-Meldungen, die an das Mobiltelefon des betreffenden Benutzers adressiert sind, im Speicher gespeichert werden und gegen Übertragung über das Netz blockiert werden; und
(2) durch Senden einer SMS mit dem zugeordneten Code zu einem zweiten und anschließenden Malen alle Meldungen, die in dem Speicher gespeichert sind, zum Mobiltelefon des betreffenden Benutzers gesandt werden und vom Speicher gelöscht werden.

2. Telekommunikationssystem nach Anspruch 1, bei der Speicher Auswahlmittel auswählt, die durch einen Benutzer mit Hilfe seines/ihres Mobiltelefons kontrolliert werden können, so dass er/sie Nummern von ausgewählten Mobiltelefonen in den Auswahlmitteln speichern kann, wobei das Speichern der Meldungen im Speicher bzw. das Abrufen und Lesen von Meldungen vom Speicher nur in Bezug auf Meldungen stattfindet, die von dem betreffenden ausgewählten Mobiltelefon empfangen worden sind.

3. Telekommunikationssystem nach Anspruch 1, bei dem der Speicher einen Zeitgeber aufweist, der den Speicher kontrolliert, nachdem eine Meldung darin gespeichert ist, so dass der Speicher diese Meldung für eine ausgewählte Zeitdauer speichert, die in dem Zeitgeber eingetragen ist, z. B. 21 Tage, und sie dann löscht.

4. Telekommunikationssystem nach Anspruch 1, bei dem die zugeordnete Telefonnummer die Telefonnummer des Mobiltelefons des betreffenden Benutzers ist.

5. Telekommunikationssystem nach Anspruch 1, bei dem, wenn der Code auf Anforderung des Benutzers zugeordnet wird, die Identifizierungsmittel falls notwendig auch die betreffenden Einstellungen des Mobiltelefons des Benutzers verändern.

6. Telekommunikationssystem nach Anspruch 1, bei dem Zugriffsmittel für den Benutzer über die Website des Anbieters kontrolliert werden können.

7. Telekommunikationssystem nach Anspruch 2, bei dem ein Benutzer Nummern von Mobiltelefonen den Auswahlmitteln mit Hilfe eines zweiten Codes angeben kann, der ihn/ihr zugeordnet ist, woraufhin dann SMS- und MMS-Meldungen, die von diesen Mobiltelefonen herrühren, nicht im Speicher gespeichert werden und daher nicht zu dem Benutzer gesandt werden, wenn Meldungen, die im Speicher gespeichert sind, durch ihn/sie abgerufen werden.

8. Telekommunikationssystem nach einem der vorangehenden Ansprüche, das Blockiermittel aufweist, mit denen ein Benutzer eine Meldung zum Computersystem mit Hilfe seines/ihres Mobiltelefons senden kann, was dazu führt, dass das Computersystem so eingestellt wird, dass eine dritte Partei, die eine SMS- oder MMS-Meldung mit Hilfe von seinem/ihrem Mobiltelefon zum Mobiltelefon des Benutzers sendet, eine Antwort auf seinem/ihrem Mobiltelefon empfängt, die zeigt, dass das Mobiltelefon des Benutzers abgeschaltet ist oder außerhalb der Reichweite des Netzes ist.

## Revendications

1. Système de télécommunication avec
un système informatique central disposé fixement mis en oeuvre par un fournisseur ;
un réseau d'unités d'émetteurs/récepteurs réparties connectées à ce système informatique ; et
un certain nombre de téléphones cellulaires, par exemple du type GSM ou UMTS, qui sont possédés par des utilisateurs et utilisés par ceux-ci, et qui comprennent des moyens pour envoyer et recevoir des messages SMS et/ou MMS à et d'un utilisateur sélectionné par l'intermédiaire du système informatique,
**caractérisé en ce que**
le système informatique comprend :
une mémoire dans laquelle lesdits messages peuvent être mémorisés et de laquelle lesdits messages peuvent être récupérés et lus afin d'être délivrés audit réseau de sorte que l'utilisateur concerné puisse les recevoir ;
des moyens d'accès qui peuvent être commandés par un utilisateur au moyen de son téléphone mobile de sorte que l'utilisateur concerné puisse accéder à la mémoire ; et
des moyens d'identification qui attribuent un code personnel à un utilisateur à la demande de cet utilisateur, et qui envoient ce code par SMS au téléphone mobile de l'utilisateur concerné, dans lequel les moyens d'accès sont libérés par l'envoi, par cet utilisateur, d'un SMS avec ce code à un numéro de téléphone spécifiquement attribué, dans lequel
(1) après l'envoi d'un SMS avec le code attribué pour la première fois, les messages SMS et MMS adressés au téléphone mobile de l'utilisateur concerné sont mémorisés dans la mémoire et ils ne peuvent pas être transmis par l'intermédiaire du réseau ; et
(2) en envoyant un SMS avec le code attribué pour la deuxième fois et les fois suivantes, tous les messages mémorisés dans la mémoire sont envoyés au téléphone mobile de l'utilisateur concerné et effacés de la mémoire.

2. Système de télécommunication selon la revendication 1, dans lequel la mémoire comprend des moyens de sélection qui peuvent être commandés par un utilisateur au moyen de son téléphone mobile de sorte qu'il puisse mémoriser des numéros de téléphones mobiles sélectionnés dans les moyens de sélection, moyennant quoi la mémorisation de messages dans la mémoire, respectivement la récupération et la lecture de messages de la mémoire ont lieu uniquement en relation avec les messages qui sont reçus des téléphones mobiles sélectionnés concernés.

3. Système de télécommunication selon la revendication 1, dans lequel la mémoire comprend un registre d'horloge qui commande la mémoire après qu'un message a été mémorisé dans celle-ci de sorte que la mémoire sauvegarde ce message pendant une période de temps choisie entrée dans le registre d'horloge, par exemple 21 jours, et l'efface ensuite.

4. Système de télécommunication selon la revendication 1, dans lequel le numéro de téléphone attribué est le numéro de téléphone du téléphone mobile de l'utilisateur concerné.

5. Système de télécommunication selon la revendication 1, dans lequel, lorsque ledit code est attribué à la demande de l'utilisateur, les moyens d'identification, si nécessaire, modifient également les paramètres concernés du téléphone mobile de l'utilisateur.

6. Système de télécommunication selon la revendication 1, dans lequel les moyens d'accès pour un utilisateur peuvent être commandés par l'intermédiaire du site Internet du fournisseur.

7. Système de télécommunication selon la revendication 2, dans lequel un utilisateur peut spécifier des numéros de téléphones mobiles aux moyens de sélection au moyen d'un deuxième code qui lui est attribué, après quoi les messages SMS ou MMS provenant de ces téléphones mobiles ne sont pas mémorisés dans la mémoire, et ne sont donc pas envoyés à l'utilisateur lorsque les messages mémorisés dans la mémoire sont récupérés par celui-ci.

8. Système de télécommunication selon l'une quelconque des revendications précédentes, comprenant des moyens de blocage par lesquels un utilisateur peut envoyer un message au système informatique au moyen de son téléphone mobile, en conséquence de quoi le système informatique est ajusté de sorte qu'un tiers, qui envoie un message SMS ou MMS au moyen de son téléphone mobile au téléphone mobile dudit utilisateur, reçoit une réponse sur son téléphone mobile qui indique que le téléphone mobile dudit utilisateur est arrêté ou est hors de portée du réseau.
